**Europäisches Patentamt**

**European Patent Office**

**Office européen des brevets**

(19)

(11) Veröffentlichungsnummer : **0 430 924 B1**

(12) ## EUROPÄISCHE PATENTSCHRIFT

(45) Veröffentlichungstag der Patentschrift :
**28.10.92 Patentblatt 92/44**

(51) Int. Cl.⁵ : **E06B 3/66,** B65B 57/14,
G01P 13/00

(21) Anmeldenummer : **90890300.8**

(22) Anmeldetag : **12.11.90**

(54) Verfahren zum Ueberwachen von sich in Leitungen bewegenden Granulatströmen.

(30) Priorität : **27.11.89 AT 2708/89**

(43) Veröffentlichungstag der Anmeldung :
**05.06.91 Patentblatt 91/23**

(45) Bekanntmachung des Hinweises auf die
Patenterteilung :
**28.10.92 Patentblatt 92/44**

(84) Benannte Vertragsstaaten :
**AT CH DE ES FR GB IT LI SE**

(56) Entgegenhaltungen :
**AU-B- 517 732**
**CH-A- 380 634**

(56) Entgegenhaltungen :
**DD-A- 254 731**
**DE-A- 1 586 284**
**DE-A- 2 310 659**
**DE-A- 3 710 694**
**US-A- 4 349 734**

(73) Patentinhaber : **Lisec, Peter**
**Bahnhofstrasse 34**
**A-3363 Amstetten-Hausmening (AT)**

(72) Erfinder : **Lisec, Peter**
**Bahnhofstrasse 34**
**A-3363 Amstetten-Hausmening (AT)**

(74) Vertreter : **Beer, Manfred, Dipl.-Ing. et al**
**Lindengasse 8**
**A-1070 Wien (AT)**

**EP 0 430 924 B1**

**Beschreibung**

Die Erfindung betrifft ein Verfahren zum Überwachen eines sich in einer Leitung bewegenden Granulatstromes, insbesondere eines Stromes aus granulatförmigem, hygroskopischem Material, das durch die Leitung aus einem Vorratsbehälter, einem Füllkopf zugeführt und in Abstandhalterrahmen für Isolierglas eingefüllt wird, wobei von einer Lichtquelle ein die Leitung querender Lichtstrahl ausgesendet wird, der auf einen der Lichtquelle gegenüberliegenden, auf das von der Lichtquelle ausgesandte Licht ansprechender Sensor, z.B. eine Fotodiode gerichtet ist, wobei der Sensor beim Einwirken von Licht ein Signal an eine mit ihm verbundene Steuerung abgibt, wobei die Lichtquelle ein Lichtwellenleiter, der gegebenenfalls gebündelte Lichtleitfasern aufweist, ist.

Aus der EP-B-195 176 ist eine Vorrichtung zum Füllen von Hohlkörpern mit Granulat bekannt, bei der die Bewegungen von Granulat in der Leitung, durch welche das Granulat befördert wird, nach dem Radarprinzip überwacht werden. Durch vom Schüttstromdetektor abgegebene Signale wird die Vorrichtung gemäß der EP-B-195 176 gesteuert. Als bevorzugtes Anwendungsbeispiel der aus der EP-B-195 176 bekannten Vorrichtung wird das Füllen von Abstandhalterrahmen für Isolierglasscheiben mit hygroskopischem Material, das granulatförmig ist, genannt.

Aus der US-A-4 349 734 ist ein Schüttstromdetektor für eine Leitung, in der Granulat befördert wird, bekannt. An der Leitung sind eine Lichtquelle, die einen die Leitung querenden Lichtstrahl aussendet, und der Lichtquelle gegenüberliegend ein auf das von der Lichtquelle ausgesandte Licht ansprechender Sensor angeordnet. Der Sensor gibt beim Einwirken des von der Lichtquelle auf ihn auftreffenden Lichtes ein Signal an eine mit ihm verbundene Steuerung ab, welche Steuerung in Abhängigkeit von dem Sensor empfangenen Signalen ihrerseits Signale abgibt. Diese Signale können zum Aufzeichnen von Änderungen des Granulatstromes oder zum Regeln desselben herangezogen werden.

Der Erfindung liegt die Aufgabe zugrunde, ein Verfahren anzugeben, das mit einem einfach aufgebauten und daher billigen Schüttstromdetektor ausführbar ist und eine zuverlässige Überwachung von sich in Leitungen bewegenden Granulatströmen erlaubt.

Erfindungsgemäß wird diese Aufgabe dadurch gelöst, daß die Steuerung ein Signal abgibt, wenn während einer vorgewählten Zeitdauer nach dem letzten vom Sensor abgegebenen Signal kein Signal des Sensors empfangen wird, und daß die Steuerung oder der Sensor ein Signal abgibt, wenn die Zahl der der Steuerung zugeführten Signale bzw. die Zahl der vom Sensor je Zeiteinheit empfangenen Lichtimpulse unter einen vorgewählten Wert absinkt.

Der Erfindung liegt die Erkenntnis zugrunde, daß durch eine Leitung strömendes Granulat den von der Lichtquelle kontinuierlich ausgesandten Lichtstrahl zeitweise unterbricht, so daß der so intermittierend auf den der Lichtquelle gegenüberliegenden Sensor auftreffende Lichtstrahl zum Erfassen des Schüttgutstromes herangezogen werden kann.

In einer praktischen Ausführungsform ist vorgesehen, daß als im wesentlichen punktförmige Lichtquelle ein Lichtwellenleiter, der gegebenenfalls gebündelte Lichtleitfasern aufweist, vorgesehen ist bzw. daß der Sensor eine Fotodiode od.dgl. ist.

Bei der Erfindung wird der Umstand ausgenützt, daß der von der Lichtquelle ausgesandte Lichtstrahl längere Zeit unterbrochen ist bzw. überhaupt unterbrochen bleibt, wenn das Granulat in der Leitung stillsteht, was beispielsweise eintritt, wenn ein Abstandhalterrahmen vollständig mit hygroskopischem Material gefüllt ist, oder wenn auf Grund irgendeiner Störung der Vorrichtung (Verstopfung) das Strömen von Granulat durch die Leitung unterbrochen ist.

Bei dem Verfahren der Erfindung gibt die Steuerung oder der Sensor ein Signal ab, wenn die Zahl der ihr zugeführten Signale bzw. der von ihm je Zeiteinheit empfangenen Lichtimpulse unter einen vorgewählten Wert absinken. Dies dient dazu, ein Signal zu erzeugen, wenn die Leitung, durch welche das Granulat geführt wird, leer ist, so daß ein dauernder Lichtstrahl auf den Detektor auftrifft. Das dann vom Sensor abgegebene Signal kann zur Auslösung eines optischen und/oder akustischen Signals oder aber zur Unterbrechung des Füllvorganges von Abstandhalterrahmen herangezogen werden.

In einer Ausführungsform des erfindungsgemäßen Verfahrens ist vorgesehen, daß die Steuerung Signale an die Steuerung des Antriebes eines der Leitung zugeordneten Absperrorgans abgibt und daß das Absperrorgan bei Empfang eines Signals von der Steuerung geschlossen wird.

Wenn das erfindungsgemäße Verfahren in Vorrichtungen zum Füllen von Abstandhalterrahmen mit zwei Leitungen, die zu je einem Füllkopf führen, durch welche gleichzeitig ein Abstandhalterrahmen für Isolierglasscheiben gefüllt wird, wie sie aus der EP-B-195 176 bekannt sind, ausgeführt wird, kann gemäß einem Vorschlag der Erfindung so vorgegangen werden, daß ein Vergleichsglied, das zwei mit den Sensoren verbundene Steuerungen verbindet, ein Signal abgibt, wenn eine der miteinander verbundenen Steuerungen von dem ihr zugeordneten Sensor ausgelost , ein Signal eine vorgegebene Zeitspanne früher abgibt als die der anderen Leitung zugeordnete Steuerung. Diese Ausführungsform geht davon aus, daß für gewöhnlich der durch die zwei Füllköpfe ausgeführte Füllvorgang der ihnen zugeordneten Hälften der Abstandhalterrahmen im Normalfall im wesentlichen gleichzeitig beendet ist. Wenn der eine Sensor eine vorgewählte Zeitspanne (in der Regel 1 bis 2 sek) früher sein Signal abgibt als der andere Sensor, dann kann auf eine Störung geschlossen werden oder aber darauf, daß die Zufuhr von Granulat zu einer der Leitungen gestört ist.

Bei der zuletzt genannten Ausführungsform des Verfahrens ist bevorzugt, wenn das Vergleichsglied Signale an die Steuerungen der Antriebe von den Leitungen zugeordneten Absperrorganen abgibt und daß aufgrund des vom Vergleichsglied abgegebenen Signals beide Absperrorgane durch die Antriebe geschlossen werden.

Für gewöhnlich ist es beim erfindungsgemäßen Verfahren so, daß der von der Lichtquelle ausgehende Lichtstrahl die Leitung in einer zur Achse der Leitung senkrechten Ebene durchquert.

Weitere Einzelheiten und Merkmale sowie Vorteile des erfindungsgemäßen Detektors ergeben sich aus der nachstehenden Beschreibung, in welcher auf die angeschlossene Zeichnung Bezug genommen wird, in der eine mit erfindungsgemäßen Detektoren ausgestattete Vorrichtung zum Füllen von Hohlkörpern (Abstandhalterrahmen) mit Granulat (hygroskopischem Material) schematisch gezeigt ist. Die Vorrichtung kann so, wie aus der EP-B-195 176 oder der DE-A-32 24 862 bekannt, ausgebildet sein.

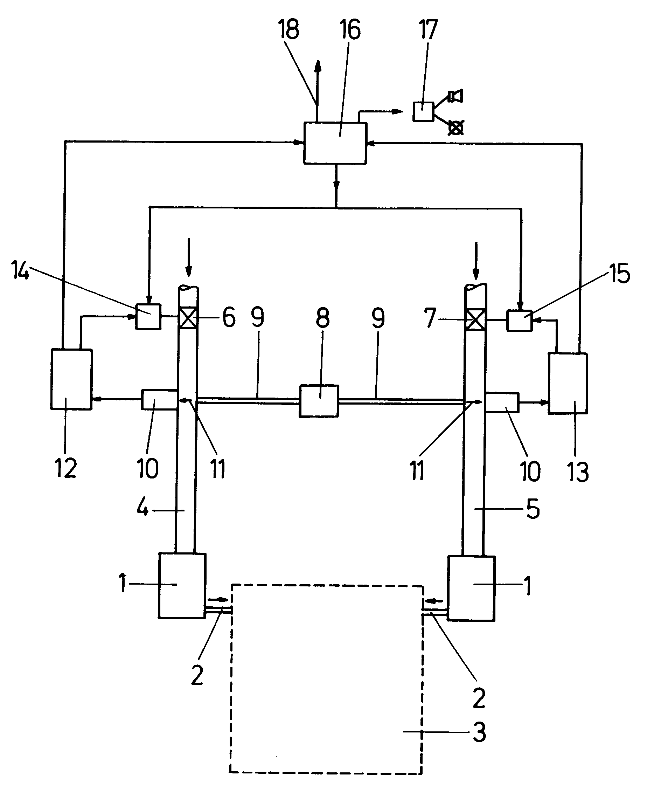

Die in der Zeichnung schematisch gezeigte Vorrichtung besitzt zwei Füllköpfe 1, die über von ihnen wegstehende Ansätze 2 das ihnen über Leitungen 4 und 5 von einer nicht näher gezeigten Vorratsbehälter oder von Vorratsbehältern, zugeführte hygroskopische, granulatförmige Material in den Innenraum eines aus Hohlprofilen oder einem zu einem Rahmen gebogenen Hohlprofil bestehenden Abstandhalterrahmen 3 einfüllen.

In den Leitungen 4 und 5 sind zur Steuerung des Füllvorganges Absperrorgane 6 und 7 vorgesehen.

In einer Öffnung in der Wand der Leitungen 4 und 5 endet je ein Lichtwellenleiter 9, durch den ein von einer Lichtquelle 8 ausgehender Lichtstrahl, der wie durch die Pfeile 11 angedeutet, die Leitungen 4 und 5 in einer zur Achse derselben im wesentlichen senkrechten Ebene quert, ausgesendet wird.

Die durch Pfeile 11 symbolisierten, von den an die Leitungen 4 und 5 angeschlossenen Enden der Lichtwellenleiter 9 ausgehenden Lichtstrahlen, treffen auf Sensoren 10, die den Enden 9 und 10 der Lichtwellenleiter diametral gegenüberliegend angeordnet sind. Die Sensoren 10, die beispielsweise als Fotodioden oder sonstige lichtempfindliche Vorrichtungen ausgeführt sind, geben ein Signal ab, wenn ein Lichtstrahl 11 auf sie auftrifft. Das von den Sensoren 10 abgegebene Signal wird einer Steuerung 12 bzw. 13 zugeführt, die mit den Sensoren 10 verbunden sind.

Die Steuerungen 12 und 13 sind so ausgelegt, daß sie ein Signal an die Steuerung des Antriebes 14 bzw. 15 der Absperrorgane 6 bzw. 7 abgeben, wobei die Steuerungen der Antriebe 14 und 15 dann die ihnen zugeordneten Absperrorgane 6 bzw. 7 schließen.

Die Steuerungen 12 und 13 geben ein Signal an die Steuerungen der Antriebe 14, 15 der Absperrorgane 6 und 7 ab, wenn während einer vorwählbaren Zeitspanne vom Sensor 10 kein Signal empfangen wird, was eintritt, wenn das Granulat die Leitung 4 bzw. 5 vollständig ausfüllt und in ihr stillsteht, so daß das von den Lichtwellenleitern 9 ausgesandte Licht nicht mehr auf die Sensoren 10 treffen kann.

Die Sensoren 10 sind weiters so ausgelegt, daß sie ein Signal an die ihnen zugeordnete Steuerung 12 bzw. 13 abgeben, wenn die Zahl der von ihnen je Zeiteinheit empfangenen Lichtimpulse unter einen vorwählbaren Wert absinken. Dieser Fall tritt ein, wenn sich die Bewegung des Granulats in den Leitungen 4 und 5 verlangsamt, was auf einen Abschluß des Füllvorganges des Abstandhalterrahmens 3 schließen läßt. Alternativ kann auch vorgesehen sein, daß die Steuerungen 12, 13 entsprechende Signale abgeben, wenn sie vom ihnen zugeordneten Sensor 10 in der Zeiteinheit weniger von letzterem empfangene Lichtimpulse entsprechende Signale erhalten.

Wie in der Zeichnung gezeigt, sind die Steuerungen 12 und 13 miteinander über ein Vergleichsglied 16 verbunden, das jeweils dann von den Steuerungen 12 und 13 Signale erhält, wenn diese auch Signale an die Steuerungen der Antriebe 14 und 15 der Absperrorgane 6 und 7 abgeben. Das Vergleichsglied 16 ermittelt den Zeitunterschied zwischen dem Empfang eines Signals von der Steuerung 12 und einem von der Steuerung 13 empfangenen Signal und gibt, soferne der Zeitunterschied eine vorgewählte Zeitspanne überschreitet, ein Signal an beide Steuerungen der Antriebe 14 und 15 der Absperrorgane 6 und 7 ab, worauf diese geschlossen werden. Zusätzlich kann vorgesehen sein, daß das Vergleichsglied 16 ein Signal an eine optische und/ oder akustische Signaleinrichtung 17 abgibt, so daß erkennbar ist, daß der Füllvorgang in einem Rahmenschenkel, z.B. der Füllvorgang des in der Zeichnung links angeordneten Füllkopfes 1, bereits abgeschlossen ist, wogegen der der Leitung 5 für den in der Zeichnung rechten Füllkopf 1 zugeordnete Sensor noch kein Signal abgegeben hat.

Es besteht auch die Möglichkeit, daß das Vergleichsglied 16 ein die Gesamtanlage stillsetzendes Signal abgibt, wie dies durch den Pfeil 18 in der Zeichnung angedeutet ist.

**Patentansprüche**

1.   Verfahren zum Überwachen eines sich in einer Leitung (4, 5) bewegenden Granulatstromes, insbesondere eines Stromes aus granulatförmigem, hygroskopischem Material, das durch die Leitung (4, 5) aus einem Vorratsbehälter, einem Füllkopf zugeführt und in Abstandhalterrahmen (3) für Isolierglas eingefüllt wird, wobei von einer Lichtquelle (9) ein die Leitung (4, 5) querender Lichtstrahl (11) ausgesendet wird, der auf einen der Lichtquelle (9) gegenüberliegenden, auf das von der Lichtquelle (9) ausgesandte Licht (11) ansprechender Sensor (10), z.B. eine Fotodiode gerichtet ist, wobei der Sensor (10) beim Einwirken von Licht ein Signal an eine mit ihm verbundene Steuerung (12, 13) abgibt, wobei die Lichtquelle (9) ein Lichtwellenleiter, der gegebenenfalls gebündelte Lichtleitfasern aufweist, ist, dadurch gekennzeichnet, daß die Steuerung (12, 13) ein Signal abgibt, wenn während einer vorgewählten Zeitdauer nach dem letzten vom Sensor (10) abgegebenen Signal kein Signal des Sensors (10) empfangen wird, und daß die Steuerung (12, 13) oder der Sensor (10) ein Signal abgibt, wenn die Zahl der der Steuerung (12, 13) zugeführten Signale bzw. die Zahl der vom Sensor (10) je Zeiteinheit empfangenen Lichtimpulse unter einen vorgewählten Wert absinkt.

2. Verfahren nach Anspruch 1, dadurch gekennzeichnet, daß die Steuerung (12, 13) Signale an die Steuerung des Antriebes eines der Leitung (4, 5) zugeordneten Absperrorgans (6, 7) abgibt und daß das Absperrorgan (6, 7) bei Empfang eines Signals von der Steuerung (12, 13) geschlossen wird.

3. Verfahren nach Anspruch 1 oder 2, wobei zwei Leitungen (4, 5) einer Vorrichtung zum Füllen von Abstandhalterrahmen (3) überwacht werden, wobei die Leitungen (4, 5) zu je einem Füllkopf (1) führen, durch welche gleichzeitig ein Abstandhalterrahmen (3) für Isolierglasscheiben mit granulatförmigem, hygroskopischem Material gefüllt wird, dadurch gekennzeichnet, daß ein Vergleichsglied (16), das zwei mit den Sensoren (10) verbundene Steuerungen (12, 13) verbindet, ein Signal abgibt, wenn eine der miteinander verbundenen Steuerungen (12, 13) von dem ihr zugeordneten Sensor (10) ausgelöst, ein Signal eine vorgegebene Zeitspanne früher abgibt als die der anderen Leitung (5, 4) zugeordnete Steuerung (13, 12).

4. Verfahren nach Anspruch 3, dadurch gekennzeichnet, daß das Vergleichsglied (16) Signale an die Steuerungen der Antriebe (14, 15) von den Leitungen (4, 5) zugeordneten Absperrorganen (6, 7) abgibt und daß aufgrund des vom Vergleichsglied (16) abgegebenen Signals beide Absperrorgane (6, 7) durch die Antriebe (14, 15) geschlossen werden.

5. Verfahren nach einem der Ansprüche 1 bis 4, dadurch gekennzeichnet, daß die von der im wesentlichen punktförmigen Lichtquelle (9) ausgehenden Lichtstrahlen (11) die Leitung (4, 5) in einer zur Achse der Leitungen (4, 5) senkrechten Ebene durchquert.

**Claims**

1. A method of monitoring the flow of a granular material moving in a duct (4,5), especially a flow of a granular, hygroscopic material, which through the duct (4, 5) is fed out of a supply hopper to a filling head and is filled into spacer frames (3) for insulating glass, wherein a light beam (11) passing through the duct (4, 5) is emitted by a light source (9) and is directed on to a sensor (10), e.g. a photo-diode, which is responsive to the light (11) emitted by the light source (9) and is arranged opposite the light source (9), wherein the sensor (10) provides a signal to a control device (12, 13) connected thereto under the action of the light, wherein the light source (9) is a light wave guide, which may comprise bundled light guide fibres, characterized in that the control device (12, 13) provides a signal when no signal is received from the sensor (10) during a predetermined time interval after the last signal provided by the sensor (10), and in that the control device (12, 13) or the sensor (10) provides a signal when the number of the signals fed to the control device (12, 13) or the number of light pulses per unit time received by the sensor (10) falls below a predetermined value.

2. A method according to claim 1, characterized in that the control device (12, 13) provides signals for controlling the drive of a shut-off device (6, 7) associated with the duct (4, 5) and in that the shut-off device (6, 7) is closed on receipt of a signal from the control device (12, 13).

3. A method according to claim 1 or 2, wherein two ducts (4, 5) of a device for filling spacer frames (3) are monitored, wherein the ducts (4, 5) each lead to a filling head, through which a spacer frame (3) for insulating glass is simultaneously filled with granular, hygroscopic material, characterized in that a comparator (16) which couples the two control devices (12, 13) connected to the sensors (10) provides a signal when one of the coupled control devices ( 12, 13) triggered by the sensor (10) associated therewith provides a signal a predetermined time interval earlier that the control device (13, 12) associated with the other duct (5, 4).

4. A method according to claim 3, characterized in that the comparator (16) provides a signal to the control devices of the drives (14, 15) of the shut-off devices (6, 7) associated with the ducts (4, 5), and in that both shut-off devices (6, 7) are closed by the drives (14, 15) in response to the signal provided by the comparator (16).

5. A method according to any of claims 1 to 4, characterized in that the light beams (11) emitted by the substantially point light sources (9) pass through the duct (4, 5) in a plane perpendicular to the axes of the ducts (4, 5).


**Revendications**

1. Procédé de surveillance d'un flux de granulés se déplaçant à l'intérieur d'une conduite (4, 5), en particulier d'un flux de produit hygroscopique en granulés, qui est amené par l'intermédiaire de la conduite (4, 5) d'un réservoir à une tête de remplissage et est introduit dans un intercalaire (3) de vitrage isolant, une source lumineuse (9) émettant un rayon lumineux (11) qui traverse la conduite (4, 5) et est dirigé sur un capteur (10) correspondant, par exemple une photodiode, réagissant à la lumière (11) émise par la source lumineuse (9) et situé en face de la source lumineuse (9), le capteur (10), lorsqu'il reçoit de la lumière, délivrant un signal à un dispositif de commande (12, 13) auquel il est relié, la source lumineuse (9) étant un guide d'ondes lumineuses qui comporte le cas échéant plusieurs fibres optiques rassemblées en faisceau, caractérisé par le fait que le dispositif de commande (12, 13) délivre un signal lorsque, pendant un laps de temps prédéterminé après le dernier signal reçu du capteur (10), aucun signal en provenance du capteur (10 n'est reçu et par le fait que le dispositif de commande (12, 13) ou le capteur (10) délivre un signal lorsque le nombre de signaux envoyés au dispositif de commande (12, 13) ou le nombre d'impulsions lumineuses par unité de temps reçues du capteur (10) est inférieur à une valeur prédéterminée.

2. Procédé selon la revendication 1, caractérisé par le fait que le dispositif de commande (12, 13) délivre des signaux au dispositif de commande du dispositif d'entraînement d'un organe de fermeture (6, 7) associé à la conduite (4, 5) et que l'organe de fermeture (6, 7) se ferme lors de la réception d'un signal en provenance du dispositif de commande (12, 13).

3. Procédé selon la revendication 1 ou 2. selon lequel deux conduites (4, 5) d'un dispositif de remplissage d'intercalaires (3) sont contrôlées, les conduites (4, 5) menant chacune à une tête de remplissage (1) grâce auxquelles on remplit simultanément de produit hygroscopique en granulés un intercalaire (3) de vitrage isolant, caractérisé par le fait qu'un élément comparateur (16) qui relie deux dispositifs de commande (12, 13) liés aux capteurs (10) délivre un signal lorsque l'un des dispositifs de commande (12, 13) liés entre eux est déclenché par le capteur (10) qui lui est associé et délivre un signal un temps prédéterminé avant le dispositif de commande (13, 12) associé à l'autre conduite (5, 4).

4. Procédé selon la revendication 3, caractérisé par le fait que l'élément comparateur (16) délivre des signaux aux dispositifs de commande des dispositifs d'entraînement (14, 15) d'organes de fermeture (6, 7) associés au conduites (4, 5) et que les deux dispositifs d'entraînement (14, 15) ferment les organes de fermeture (6, 7) sur la base du signal délivré par l'élément comparateur (16).

5. Procédé selon l'une des revendications 1 à 4, caractérisé par le fait que les rayons lumineux (11) provenant de la source lumineuse (9) sensiblement ponctuelle traversent les conduites (4, 5) dans un plan qui est perpendiculaire à l'axe desdites conduites (4, 5).